(19) Europäisches Patentamt / European Patent Office / Office européen des brevets

(11) **EP 3 396 387 A1**

(12) **EUROPEAN PATENT APPLICATION**
published in accordance with Art. 153(4) EPC

(43) Date of publication:
**31.10.2018 Bulletin 2018/44**

(21) Application number: **16878378.5**

(22) Date of filing: **08.12.2016**

(51) Int Cl.:
**G01N 35/04** (2006.01)

(86) International application number:
**PCT/JP2016/086497**

(87) International publication number:
**WO 2017/110486 (29.06.2017 Gazette 2017/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.12.2015 JP 2015254309**

(71) Applicant: **Jeol Ltd.**
**Akishima-shi, Tokyo 196-8558 (JP)**

(72) Inventors:
• **ABE Naoyuki**
**Akishima-shi**
**Tokyo 196-8558 (JP)**
• **NAKAMURA Mizuki**
**Akishima-shi**
**Tokyo 196-8558 (JP)**

(74) Representative: **Boult Wade Tennant LLP**
**Verulam Gardens**
**70 Gray's Inn Road**
**London WC1X 8BT (GB)**

(54) **SAMPLE RACK CONVEYANCE DEVICE AND AUTOMATIC ANALYSIS SYSTEM**

(57) The sample rack conveyance device includes a pusher member, a driving unit, a control unit, a front rack detection sensor, and a pusher movement amount storage unit. The front rack detection sensor moves together with the pusher member, detects a sample rack arranged more frontward in the conveyance direction than the sample rack conveyed by the pusher member. The pusher movement amount storage unit stores the movement amount at the time of movement from a sample rack conveyance start position on the pusher member. Furthermore, the control unit controls driving of the driving unit on the basis of the movement amount stored in the pusher movement amount storage unit.

FIG. 8

EP 3 396 387 A1

**Description**

Technical Field

The present invention relates to a sample rack conveyance device that conveys a sample rack accommodating a sample container and an automatic analysis system including the sample rack conveyance device.

Background Art

Conventionally, there is known an automatic analyzer that quantitatively measures a specific substance in a sample being a biospecimen such as blood or urine. The automatic analyzer uses a sample container for containing a sample. Such an automatic analyzer includes, for example, a sample storage unit storing a plurality of sample containers and a reaction unit reacting the sample with the reagent.

There is also known a sample rack conveyance device that conveys a sample container to a sample storage unit of an automatic analyzer. The sample rack conveyance device conveys a plurality of sample containers in a state of being accommodated in a sample rack (refer to Patent Literature 1).

A technique described in Patent Literature 1 is a technique in which a tray accommodating a sample rack and an arrival sensor that detects a sample rack conveyed to a tray are provided. In the technique described in Patent Literature 1, a sample rack is conveyed by driving the conveyance mechanism until the arrival sensor detects the sample rack.

Citation List

Patent Literature

Patent Literature 1: JP 2002-181835 A

Summary of Invention

Technical Problem

However, according to the technique described in Patent Literature 1, there is a variation in a period between the detection of the sample rack by the arrival sensor and the stopping of the conveyance of the sample rack depending on the sensitivity of the arrival sensor and the shape of the sample rack. For this reason, the technique described in Patent Literature 1 has a problem of having difficulty in accurately conveying the sample rack to a predetermined position.

In view of the above problem, an object of the present invention is to provide a sample rack conveyance device and an automatic analysis system capable of accurately conveying a sample rack to a predetermined position.

Solution to Problem

In order to solve the above problem and achieve the object of the present invention, a sample rack conveyance device of the present invention includes a pusher member, a driving unit, a control unit, a front rack detection sensor, and a pusher movement amount storage unit. The pusher member presses and conveys the sample rack accommodating a plurality of sample containers. The driving unit moves the pusher member in the conveyance direction. The control unit controls driving of the driving unit. The front rack detection sensor moves together with the pusher member, detects a sample rack arranged more frontward in the conveyance direction than the sample rack conveyed by the pusher member, and outputs a rack detection signal to the control unit when the sample rack is detected. The pusher movement amount storage unit stores the movement amount at the time of movement from a sample rack conveyance start position on the pusher member. Furthermore, the control unit controls driving of the driving unit on the basis of the movement amount stored in the pusher movement amount storage unit.

Furthermore, an automatic analysis system according to the present invention includes an automatic analyzer that analyzes a sample contained in a sample container, and a sample rack conveyance device that conveys a sample rack accommodating the sample container. As the sample rack conveyance device, the above-described sample rack conveyance device is used.

Advantageous Effects of Invention

According to the sample rack conveyance device and the automatic analysis system of the present invention, it is possible to accurately convey the sample rack to a predetermined position.

Brief Description of Drawings

Fig. 1 is a plan view schematically illustrating an automatic analysis system according to an exemplary embodiment of the present invention.

Fig. 2 is a perspective view illustrating a sample rack conveyance device according to an exemplary embodiment of the present invention.

Fig. 3 is a plan view illustrating a sample rack conveyance device according to an exemplary embodiment of the present invention.

Fig. 4 is a perspective view illustrating a main portion of a sample rack conveyance device according to an exemplary embodiment of the present invention.

Fig. 5 is a block diagram illustrating a control system of a sample rack conveyance device according to an exemplary embodiment of the present invention.

Fig. 6 is a flowchart illustrating operation of a recovery unit of a sample rack conveyance device according to an exemplary embodiment of the present invention.

Fig. 7 is an explanatory view illustrating operation of a recovery unit of a sample rack conveyance device according to an exemplary embodiment of the present invention.

Fig. 8 is an explanatory view illustrating operation of a recovery unit of a sample rack conveyance device according to an exemplary embodiment of the present invention.

Fig. 9 is a flowchart illustrating a sample rack recovery operation in the sample rack conveyance device according to an exemplary embodiment of the present invention.

Fig. 10 is an explanatory view illustrating a sample rack recovery operation in a sample rack conveyance device according to an exemplary embodiment of the present invention.

Fig. 11 is an explanatory view illustrating a sample rack recovery operation in a sample rack conveyance device according to an exemplary embodiment of the present invention.

Description of Embodiments

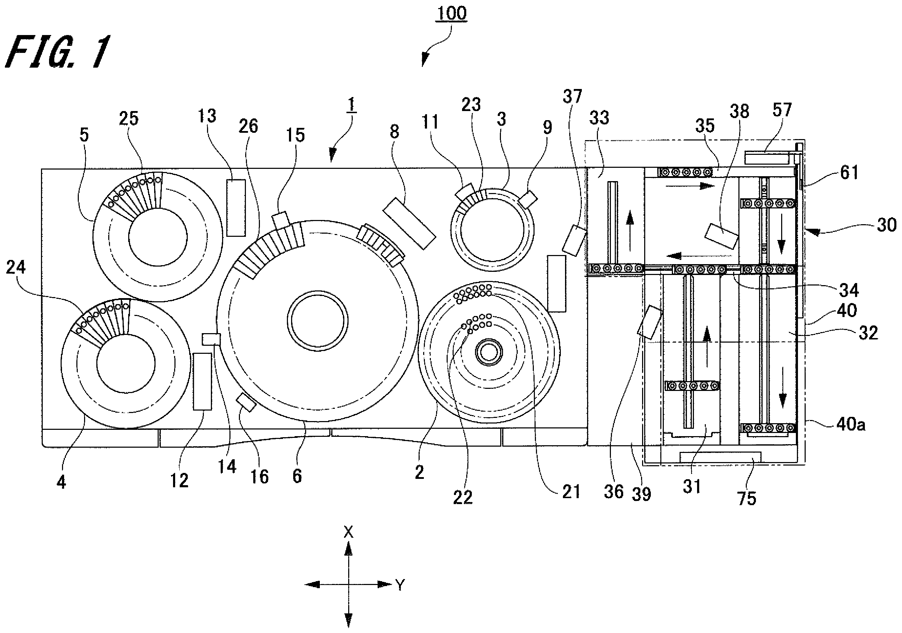

Hereinafter, exemplary embodiments of a sample rack conveyance device and an automatic analysis system according to the present invention will be described below with reference to Figs. 1 to 11. In the drawings, common members are denoted by the same reference numerals. In addition, the description will be given in the following order, but the present invention is not necessarily limited to the following form.

Exemplary embodiments

1-1. Configuration of automatic analysis system

First, an automatic analysis system according to an exemplary embodiment of the present invention (hereinafter referred to as "the present exemplary embodiment") will be described with reference to Fig. 1.

Fig. 1 is an explanatory view schematically illustrating the automatic analysis system in the present exemplary embodiment.

The apparatus illustrated in Fig. 1 is a biochemical analysis system 100 applied as an example of the automatic analysis system according to the present invention. The biochemical analysis system 100 is an apparatus that automatically measures the amount of a specific component contained in a biospecimen such as blood or urine.

As illustrated in Fig. 1, the biochemical analysis system 100 includes: a biochemical analyzer 1 that automatically measures the amount of a specific component contained in a biospecimen; and a sample rack conveyance device 30 that conveys a sample rack.

1-2. Configuration of biochemical analyzer

The biochemical analyzer 1 includes a sample turntable 2, a dilution turntable 3, a first reagent turntable 4, a second reagent turntable 5, and a reaction turntable 6. The biochemical analyzer 1 further includes a sample dilution pipette 7, a sampling pipette 8, a dilution stirring device 9, a dilution washing device 11, a first reagent pipette 12, a second reagent pipette 13, a first reaction stirring device 14, a second reaction stirring device 15, a multi-wavelength photometer 16, and a reaction vessel washing device 18.

The sample turntable 2 as an example of the sample storage unit of the present exemplary embodiment is formed in a substantially cylindrical container shape with one end open in the axial direction. The sample turntable 2 accommodates a plurality of sample containers 21 and a plurality of diluent containers 22. A sample of blood, urine, or the like is contained in the sample container 21. The diluent container 22 accommodates a special diluent other than physiological saline as a normal diluent.

The plurality of sample containers 21 is arranged side by side at a predetermined interval in the circumferential direction of the sample turntable 2. Moreover, two rows of sample containers 21 arranged in the circumferential direction on the sample turntable 2 are set with a predetermined interval in the radial direction of the sample turntable 2.

The plurality of diluent containers 22 is arranged more inward in the radial direction of the sample turntable 2 than the rows of the plurality of sample containers 21. Similarly to the plurality of sample containers 21, the plurality of diluent containers 22 is arranged side by side at a predetermined interval in the circumferential direction of the sample turntable 2. Two rows of diluent containers 22 arranged in the circumferential direction on the sample turntable 2 are set with a predetermined interval in the radial direction of the sample turntable 2.

Note that the arrangement of the plurality of sample containers 21 and the plurality of diluent containers 22 is not limited to two rows, and may be one row or three or more rows in the radial direction of the sample turntable 2.

The sample turntable 2 is rotatably supported in the circumferential direction by a driving mechanism (not illustrated). Then, the sample turntable 2 is rotated at a predetermined speed by a predetermined angular range in the circumferential direction by the driving mechanism (not illustrated). Furthermore, the dilution turntable 3 is arranged around the sample turntable 2.

Similarly to the sample turntable 2, each of the dilution turntable 3, the first reagent turntable 4, the second reagent turntable 5, and the reaction turntable 6 is formed in a substantially cylindrical shape with one end open in the axial direction. Each of the dilution turntable 3 and the reaction turntable 6 is rotated at a predetermined speed by a predetermined angular range in the circumferential direction by a driving mechanism (not illustrated). Note that the reaction turntable 6 is set so as to rotate a half round or more by one movement.

A plurality of dilution containers 23 is accommodated in the dilution turntable 3 side by side in the circumferential direction of the dilution turntable 3. The dilution container 23 contains a diluted sample (hereinafter referred to as "diluted sample") aspirated from the sample container 21 arranged on the sample turntable 2.

A plurality of first reagent containers 24 is accommodated in the first reagent turntable 4 side by side in the circumferential direction of the first reagent turntable 4. In addition, a plurality of second reagent containers 25 is accommodated in the second reagent turntable 5 side by side in the circumferential direction of the second reagent turntable 5. The concentrated first reagent is accommodated in the first reagent container 24, while the concentrated second reagent is accommodated in the second reagent container 25.

Furthermore, each of the first reagent turntable 4, the first reagent container 24, the second reagent turntable 5 and the second reagent container 25 is maintained at a predetermined temperature by a cold storage mechanism (not illustrated). Therefore, each of the first reagent contained in the first reagent container 24 and the second reagent contained in the second reagent container 25 is cooled at a predetermined temperature.

The reaction turntable 6 illustrating one example of the reaction unit of the present exemplary embodiment is arranged at a position surrounded by the dilution turntable 3, the first reagent turntable 4, and the second reagent turntable 5. A plurality of reaction vessels 26 is accommodated in the reaction turntable 6 side by side in the circumferential direction of the reaction turntable 6. The reaction vessel 26 receives injection of a diluted sample sampled from the dilution container 23 of the dilution turntable 3, a first reagent sampled from the first reagent container 24 of the first reagent turntable 4, and a second reagent sampled from the second reagent container 25 of the second reagent turntable 5. Then, the diluted sample, the first reagent, and the second reagent are stirred in the reaction vessel 26 to activate reaction.

The sample dilution pipette 7 is arranged around the sample turntable 2 and the dilution turntable 3. The sample dilution pipette 7 is supported by a dilution pipette driving mechanism (not illustrated) so as to be movably in the axial direction (for example, in the up-down direction) of the sample turntable 2 and the dilution turntable 3. The sample dilution pipette 7 is supported by the dilution pipette driving mechanism so as to be pivotable in a horizontal direction substantially parallel to the openings of the sample turntable 2 and the dilution turntable 3. Then, the sample dilution pipette 7 reciprocates between the sample turntable 2 and the dilution turntable 3 by pivoting in the horizontal direction. Note that the sample dilution pipette 7 passes through a washing device (not illustrated) during movement of the sample dilution pipette 7 between the sample turntable 2 and the dilution turntable 3.

Now, operation of the sample dilution pipette 7 will be described.

When the sample dilution pipette 7 moves to a predetermined position above the opening of the sample turntable 2, the sample dilution pipette 7 descends in the axial direction on the sample turntable 2, and inserts a pipette provided at a tip end into the sample container 21. At this time, a sample pump (not illustrated) operates to cause the sample dilution pipette 7 to aspirate a predetermined amount of the sample contained in the sample container 21. Next, the sample dilution pipette 7 ascends in the axial direction of the sample turntable 2 and then extracts the pipette from the sample container 21. Then, the sample dilution pipette 7 pivots in the horizontal direction, and then moves to a predetermined position above the opening in the dilution turntable 3.

Next, the sample dilution pipette 7 descends in the axial direction of the dilution turntable 3, and inserts a pipette into the predetermined dilution container 23. Then, the sample dilution pipette 7 dispenses the aspirated sample and a predetermined amount of diluent (for example, physiological saline) supplied from the sample dilution pipette 7 itself into the dilution container 23. As a result, the sample is diluted to a predetermined multiple concentration in the dilution container 23. Thereafter, the sample dilution pipette 7 is washed by a washing device.

The sampling pipette 8 is arranged between the dilution turntable 3 and the reaction turntable 6. Similarly to the sample dilution pipette 7, the sampling pipette 8 is supported by a sampling pipette driving mechanism (not illustrated) so as to be movable and pivotable in the axial direction (up-down direction) and the horizontal direction of the dilution turntable 3. Then, the sampling pipette 8 reciprocates between the dilution turntable 3 and the reaction turntable 6.

This sampling pipette 8 inserts a pipette into the dilution container 23 of the dilution turntable 3 and aspirates a predetermined amount of diluted sample. Then, the sampling pipette 8 dispenses the aspirated diluted sample into the reaction vessel 26 of the reaction turntable 6.

The first reagent pipette 12 is arranged between the reaction turntable 6 and the first reagent turntable 4, while the second reagent pipette 13 is arranged between the reaction turntable 6 and the second reagent turntable 5. The first reagent pipette 12 is supported so as to be movable and pivotable in the axial direction (up-down direction) and horizontal direction of the reaction turntable 6 by a first reagent pipette driving mechanism (not illustrated). Then, the first reagent pipette 12 reciprocates between the first reagent turntable 4 and the reaction turntable 6.

The first reagent pipette 12 inserts a pipette into the first reagent container 24 of the first reagent turntable 4 and aspirates a predetermined amount of the first reagent. Then, the first reagent pipette 12 dispenses the aspirated first reagent into the reaction vessel 26 of the reaction turntable 6.

Furthermore, similarly to the first reagent pipette 12, the second reagent pipette 13 is supported by a second reagent pipette driving mechanism (not illustrated) so as to be movable and pivotable in the axial direction (up-down direction) and horizontal direction of the reaction turntable 6. Then, the second reagent pipette 13 reciprocates between the second reagent turntable 5 and the reaction turntable 6.

The second reagent pipette 13 inserts a pipette into the second reagent container 25 of the second reagent turntable 5 and aspirates a predetermined amount of the second reagent. Then, the second reagent pipette 13 dispenses the aspirated second reagent into the reaction vessel 26 of the reaction turntable 6.

The dilution stirring device 9 and the dilution washing device 11 are arranged around the dilution turntable 3. The dilution stirring device 9 inserts a stirrer (not illustrated) into the dilution container 23 and stirs the sample and the diluent.

The dilution washing device 11 is a device for washing the dilution container 23 after the diluted sample has been aspirated by the sampling pipette 8. The dilution washing device 11 includes a plurality of dilution container washing nozzles. The plurality of dilution container washing nozzles is connected to a waste liquid pump (not illustrated) and a detergent pump (not illustrated). The dilution washing device 11 inserts the dilution container washing nozzle into the dilution container 23 and aspirates the diluted sample remaining in the dilution container 23 by the dilution container washing nozzle inserted by driving the waste liquid pump. Then, the dilution washing device 11 discharges the inhaled diluted sample to a waste liquid tank (not illustrated).

Thereafter, the dilution washing device 11 supplies detergent from the detergent pump to the dilution container washing nozzle, and dispenses the detergent from the dilution container washing nozzle into the dilution container 23. The inside of the dilution container 23 is washed with this detergent. Thereafter, the dilution washing device 11 aspirates the detergent with the dilution container washing nozzle, and dries the interior of the dilution container 23.

The first reaction stirring device 14, the second reaction stirring device 15, and the reaction vessel washing device 18 are arranged around the reaction turntable 6. The first reaction stirring device 14 inserts a stirrer (not illustrated) into the reaction vessel 26 and stirs the diluted sample and the first reagent. This enables reaction between the diluted sample and the first reagent to be uniformly and quickly performed. Since the configuration of the first reaction stirring device 14 is the same as that of the dilution stirring device 9, description thereof will be omitted here.

The second reaction stirring device 15 inserts a stirrer (not illustrated) into the reaction vessel 26, and stirs the diluted sample, the first reagent, and the second reagent. This enables reaction between the diluted sample, the first reagent, and the second reagent to be uniformly and quickly performed. Since the configuration of the second reaction stirring device 15 is the same as that of the dilution stirring device 9, description thereof will be omitted here.

The reaction vessel washing device 18 is a device for washing the interior of the reaction vessel 26 after the inspection. The reaction vessel washing device 18 includes a plurality of reaction vessel washing nozzles. Similarly to the dilution container washing nozzles, the plurality of reaction vessel washing nozzles is connected to the waste liquid pump (not illustrated) and the detergent pump (not illustrated). Since the washing process in the reaction vessel washing device 18 is similar to the above-described dilution washing device 11, description thereof will be omitted.

The multi-wavelength photometer 16 is arranged so as to face the outer wall of the reaction turntable 6 around the reaction turntable 6. The multi-wavelength photometer 16 performs optical measurement on the diluted sample injected into the reaction vessel 26 and reacted with the first medical liquid and the second medical liquid, outputs the amount of various components in the sample as numerical data of "absorbance", so as to detect a reaction state of the diluted sample.

Furthermore, a thermostatic chamber (not illustrated) is arranged around the reaction turntable 6. This thermostatic chamber is configured to constantly maintain the temperature of the reaction vessel 26 provided in the reaction turntable 6 at a fixed level.

1-3. Configuration of sample rack conveyance device

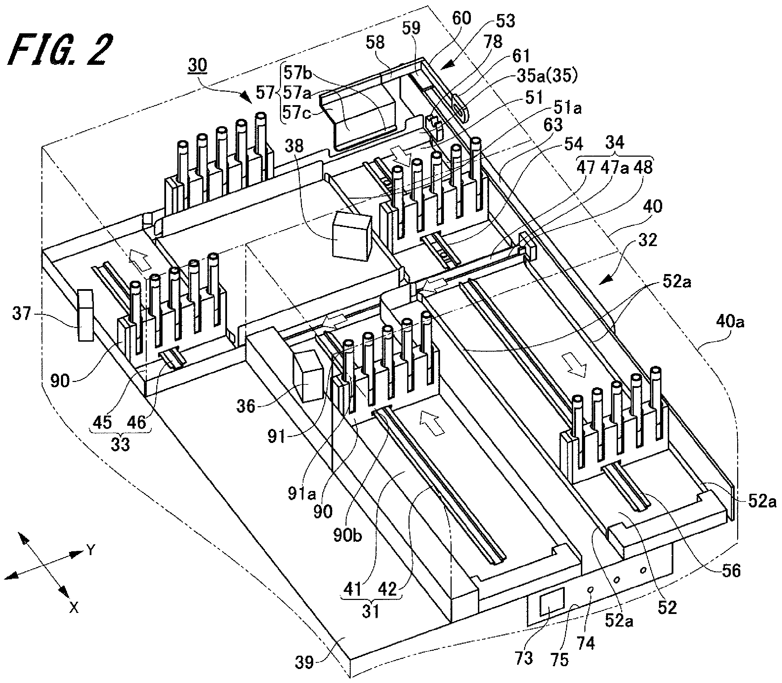

Next, a detailed configuration of the sample rack conveyance device (hereinafter simply referred to as "conveyance device") 30 will be described with reference to Figs. 2 to 6.

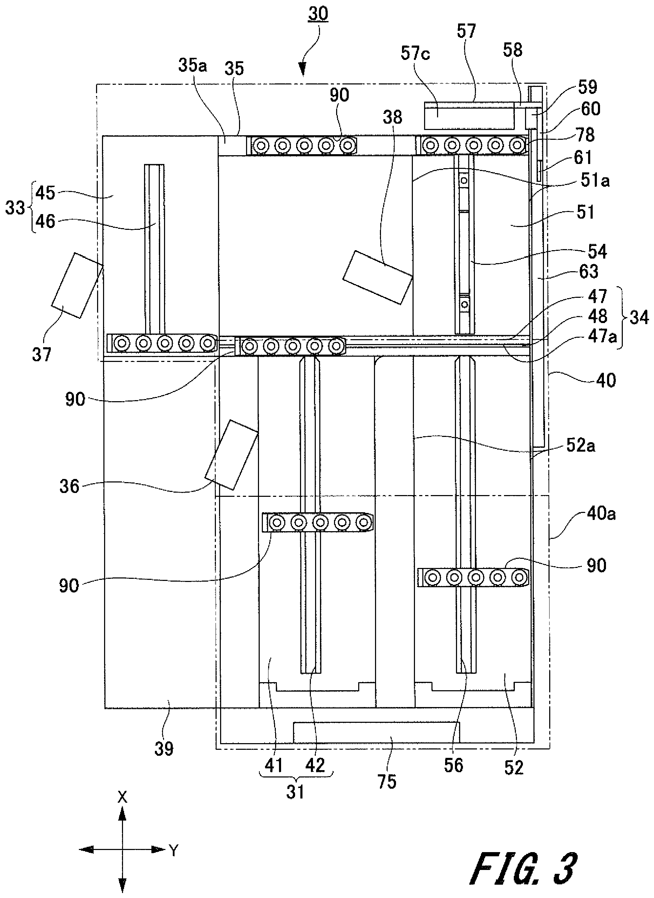

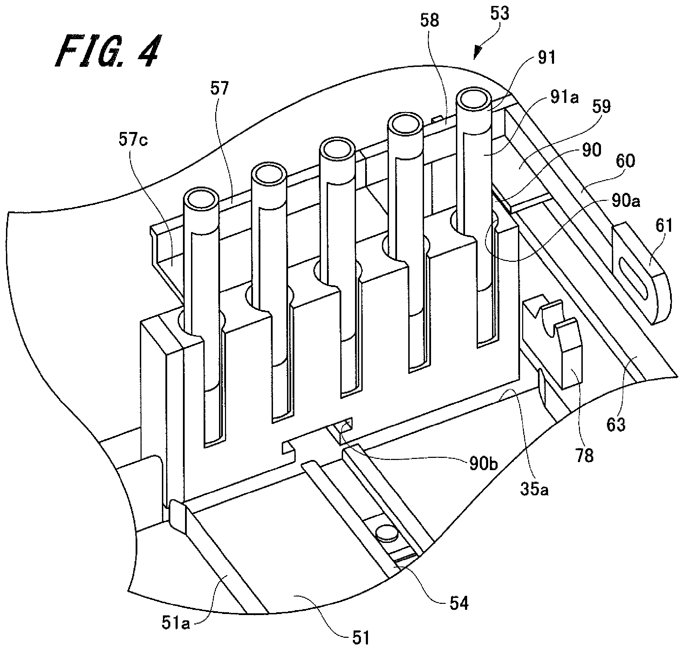

Fig. 2 is a perspective view illustrating the sample rack conveyance device 30, and Fig. 3 is a plan view illustrating the sample rack conveyance device 30. Fig. 4 is a perspective view illustrating a main portion of the sample rack conveyance device 30.

As illustrated in Figs. 1 to 3, the conveyance device 30 is arranged adjacent to the biochemical analyzer 1. The conveyance device 30 supplies a sample to the sample container 21 accommodated in the sample turntable 2. Note that the container for supplying the sample is not limited to the sample container 21 accommodated in the sample turntable 2, and the sample may be supplied directly to the dilution container 23 of the dilution turntable 3. Furthermore, the sample to be supplied to the sample container 21 is accommodated in a rack side sample container 91. The rack side sample container 91 is accommodated in the sample rack 90. Note that an identifier 91a indicating information of the sample contained is affixed to the rack side sample container 91. Examples of the identifier 91a include various forms including a bar code and a two-dimensional code.

[Sample rack]

Here, a configuration of the sample rack 90 will be described with reference to Fig. 4.

As illustrated in Fig. 4, the sample rack 90 is formed in a substantially rectangular parallelepiped shape. In addition, the sample rack 90 is formed with a plurality of accommodating portions 90a for accommodating the rack side sample container 91. The accommodating portion 90a is a hole portion that holds the rack side sample container 91 to be erected so as to direct its opening to face upward in the up-down direction. The plurality of accommodating portions 90a is formed at predetermined intervals in the longitudinal direction of the sample rack 90.

Note that while the sample rack 90 of the present exemplary embodiment is an example of providing five accommodating portions 90a, the present invention is not limited thereto, and four or less or six or more accommodating portions 90a may be provided.

An engagement groove portion 90b is formed at a lower end portion of the sample rack 90 in the up-down direction, that is, an end portion on the side opposite to the end portion where the accommodating portion 90a is formed. The engagement groove portion 90b is formed in a substantially central portion in the longitudinal direction on the sample rack 90. The engagement groove portion 90b is a groove portion formed continuously in a width direction of the sample rack 90, that is, in the short side direction. The engagement groove portion 90b is engaged with a guide rail (described below) provided in a conveyance device 30.

[Sample rack conveyance device]

Next, the conveyance device 30 that conveys the above-described sample rack 90 will be described.

Note that a direction parallel to the horizontal direction, orthogonal to an adjacent arrangement direction of the conveyance device 30 and the biochemical analyzer 1, and parallel to the horizontal direction is defined as a first direction X. A direction parallel to the horizontal direction and orthogonal to the first direction X is defined as a second direction Y.

As illustrated in Figs. 2 and 3, the conveyance device 30 includes a supply unit 31, a recovery unit 32, a sample input unit 33, a first conveyance lane 34, and a second conveyance lane 35. Furthermore, the conveyance device 30 includes a first reading unit 36, a second reading unit 37, and a third reading unit 38. The conveyance device 30 further includes a support base 39 and a lid portion 40.

The supply unit 31, the recovery unit 32, the sample input unit 33, the first conveyance lane 34, the second conveyance lane 35, the first reading unit 36, the second reading unit 37, and the third reading unit 38 are mounted on the support base 39. The lid portion 40 covers the supply unit 31, the recovery unit 32, the sample input unit 33, the first conveyance lane 34, the second conveyance lane 35, the first reading unit 36, the second reading unit 37, and the third reading unit 38, mounted on the support base 39.

In addition, the lid portion 40 includes an open/close cover 40a that can be opened and closed. The open/close cover 40a is installed on one side in the first direction X of the lid portion 40, and covers a supply tray 41 of the supply unit 31 and a recovery tray 52 of the recovery unit 32, which will be described below. With the open/close cover 40a open, the sample rack 90 can be supplied to the supply tray 41, and in addition, the sample rack 90 accommodated in the recovery tray 52 can be recovered.

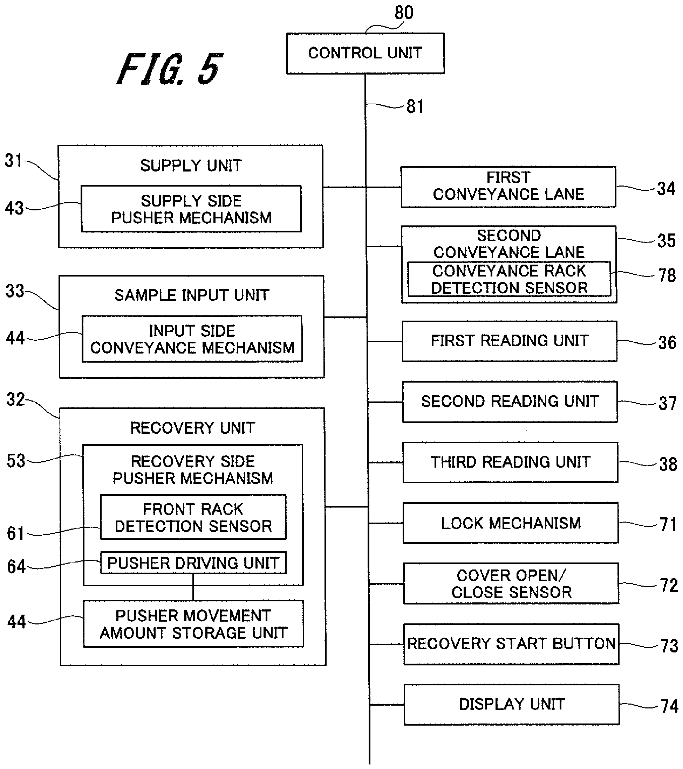

Furthermore, the support base 39 includes: a lock mechanism 71 (refer to Fig. 5) to lock open/close operation of the open/close cover 40a; and a cover open/close sensor 72 (refer to Fig. 5) to detect an open/closed state of the open/close cover 40a. An operation display unit 75 is provided at one end portion of the support base 39 in the first direction X.

The operation display unit 75 includes a recovery start button 73 and a display unit 74 including a plurality of lamps. The display unit 74, which is an example of the notification unit, notifies a user of the locked state of the open/close cover 40a and states of other units by emitting, blinking or turning off the plurality of lamps.

Note that while the present exemplary embodiment describes an example in which the display unit 74 including a plurality of lamps is applied as the notification unit, the present invention is not limited thereto. As the notification unit, it is allowable to apply various notifying methods such as a display device for notifying the locked state of the open/close cover 40a and states of the other units by pictures or texts, and a buzzer for notifying by sound.

The first reading unit 36, the second reading unit 37, and the third reading unit 38 are configured to read the identifier 91a affixed to the rack side sample container 91, and are represented by bar code readers, for example.

The recovery unit 32 is arranged on one side in the second direction Y of the conveyance device 30. The sample input unit 33 is arranged on the other side in the second direction Y of the conveyance device 30, that is, on the biochemical analyzer 1 side. The supply unit 31 is arranged on more toward the other side in the second direction Y than the recovery unit 32. Moreover, the supply unit 31 is arranged on more toward the one side in the second direction Y than the sample input unit 33 and on more toward the one side in the first direction X than the sample input unit 33.

The supply unit 31 includes the supply tray 41, a supply side guide rail 42, and a supply side pusher mechanism 43 (refer to Fig. 5). A sample rack 90 accommodating a rack side sample container 91 containing a sample to be supplied to the biochemical analyzer 1 is mounted on the supply tray 41. At this time, the sample rack 90 is mounted so as to set its longitudinal direction, that is, the arrangement direction of the rack side sample containers 91 to be substantially in parallel with the second direction Y.

The supply tray 41 is formed in a flat plate shape. In addition, both end portions of the supply tray 41 in the second direction Y are bent substantially perpendicularly upward in the up-down direction. The both end portions that are bent on the supply tray 41 faces both end portions in the longitudinal direction on the sample rack 90 that has been mounted. That is, the both end portions of the supply tray 41 serve as guide pieces in conveyance of the sample rack 90.

The supply side guide rail 42 is arranged substantially at the center of the supply tray 41 in the second direction Y. The supply side guide rail 42 is arranged in parallel with the first direction X on one surface of the supply tray 41. The engagement groove portion 90b of the sample rack 90 is slidably engaged with the supply side guide rail 42. The supply side guide rail 42 prevents the sample rack 90 from falling over and guides the movement of the sample rack 90.

The supply side pusher mechanism 43 pushes the sample rack 90 mounted on the supply tray 41 and engaged with the supply side guide rail 42 from one side to the other side in the first direction X of the supply tray 41. At this time, the sample rack 90 is conveyed in the direction of conveyance substantially in parallel with the short side direction.

The first reading unit 36 is arranged in the vicinity of the supply unit 31. The first reading unit 36 is arranged on the other side in the first direction X of the supply tray 41, that is, in the vicinity of the discharge side of the sample rack 90 in the supply tray 41. Then, the first reading unit 36 reads the identifier 91a of the rack side sample container 91 supplied to the supply unit 31.

Furthermore, the first conveyance lane 34 is arranged on the other side in the first direction X of the supply unit 31, that is, on the discharge side of the sample rack 90 in the supply unit 31. The first conveyance lane 34 conveys the sample rack 90 discharged from the supply unit 31 to the sample input unit 33.

The first conveyance lane 34 includes a mounting surface portion 47, a conveyance side pusher 48, and a conveyance side driving mechanism (not illustrated) for driving the conveyance side pusher 48. The mounting surface portion 47 is formed in a flat plate shape. The mounting surface portion 47 passes through the supply unit 31 from the recovery unit 32 in the second direction Y and extends to the sample input unit 33. Moreover, one side in the second direction Y of the mounting surface portion 47 is arranged between a re-inspection waiting tray 51 and the recovery tray 52 of the recovery unit 32 to be described below.

A groove portion 47a is formed in the mounting surface portion 47. The groove portion 47a penetrates the mounting surface portion 47 in the up-down direction. The groove portion 47a passes from the recovery unit 32 through the supply unit 31 in the second direction Y and extends to the sample input unit 33.

The conveyance side pusher 48 is inserted through the groove portion 47a. The conveyance side pusher 48 moves in the groove portion 47a by a conveying side driving mechanism (not illustrated). The conveyance side pusher 48 comes in contact with a lower end portion in the up-down direction of the sample rack 90 mounted on the mounting surface portion 47. Therefore, the sample rack 90 conveyed from the supply tray 41 or the re-inspection waiting tray 51 to the mounting surface portion 47 is pressed by the conveyance side pusher 48 and conveyed toward the sample input unit 33. At this time, the sample rack 90 is conveyed in the direction of conveyance substantially in parallel with the longitudinal direction.

That is, the first conveyance lane 34 conveys the sample to be inspected by the biochemical analyzer 1, supplied from the supply tray 41 of the supply unit 31. Furthermore, the first conveyance lane 34 conveys the sample rack 90 to be inspected again (re-inspected) among the sample racks 90 for which the dispensation processing has been completed. One end portion in the second direction Y of the first conveyance lane 34 serves as a conveyance start position for re-inspection. In addition, a middle portion in the second direction Y of the first conveyance lane 34, that is, a portion facing the supply tray 41 is a conveyance start position for feeding. The first conveyance lane 34 also has a function as a conveyance lane for re-inspection.

The sample input unit 33 includes a sample input tray 45, an input side guide rail 46, and an input side conveyance mechanism 44 (refer to Fig. 5). Similarly to the supply tray 41, the sample input tray 45 is formed in a flat plate shape. In addition, both end portions in the second direction Y of the sample input tray 45 are bent upward in the up-down direction. The sample rack 90 conveyed by the first conveyance lane 34 is mounted on the sample input tray 45.

The input side guide rail 46 is arranged substantially at the center in the second direction Y of the sample input tray 45. The input side guide rail 46 is arranged in parallel with the first direction X on one surface of the sample input tray 45. The engagement groove portion 90b of the sample rack 90 is slidably engaged with the input side guide rail 46. Then, the input side guide rail 46 prevents the sample rack 90 from falling over and guides the movement of the sample rack 90.

The input side conveyance mechanism 44 conveys the sample rack 90 mounted on the sample input tray 45 and engaged with the input side guide rail 46, in the first direction X. In addition, the input side conveyance mechanism temporarily stops conveyance of the sample rack 90 at the dispensation position that is substantially the center in the first direction X of the sample input tray 45.

The second reading unit 37 is arranged in the vicinity of the dispensation position in this sample input unit 33. The second reading unit 37 reads the identifier 91a of the rack side sample container 91 conveyed to the dispensation position.

Then, the sample contained in the rack side sample container 91 is supplied to the sample container 21 accommodated in the sample turntable 2 by a pipette provided in the biochemical analyzer 1. In addition, the input side conveyance mechanism conveys the sample rack 90 that has supplied the sample, to the other end portion in the first direction X of the sample input unit 33.

A second conveyance lane 35 is arranged at the other end portion in the first direction X of the sample input unit 33. The second conveyance lane 35 is arranged in the second direction Y on the other end side in the first direction X of the conveyance device 30. The second conveyance lane 35 includes an endless shaped conveyance belt 35a and a driving unit (not illustrated). The conveyance belt 35a of the second conveyance lane 35 extends from the sample input unit 33 to the recovery unit 32 in parallel with the second direction Y.

The second conveyance lane 35 conveys the sample rack 90 conveyed on the conveyance belt 35a to the other side in the first direction X of the recovery unit 32 in the second direction Y. The other end portion in the second direction Y of the second conveyance lane 35 is a reception position for receiving the sample rack 90 from the sample input unit 33. One end portion in the second direction Y of the second conveyance lane 35 is a conveyance start position for recovery of a recovery side pusher member 57 of the recovery unit 32 described below, to be described below.

A conveyance rack detection sensor 78 is provided at one end portion in the second direction Y of the second conveyance lane 35, that is, at the conveyance start position of the recovery side pusher member 57. The conveyance rack detection sensor 78 detects the presence or absence of the sample rack 90 at the conveyance start position. That is, the conveyance rack detection sensor 78 detects the presence or absence of the sample rack 90 conveyed by the recovery side pusher member 57.

Examples of the applicable conveyance rack detection sensor 78 include an infrared sensor, a mechanical sensor, an optical sensor, and other various sensors.

Note that while the conveyance device 30 according to the present exemplary embodiment is an example of using the conveyance side pusher 48 as a conveyance method of the sample rack 90 of the first conveyance lane 34, the conveyance method is not limited thereto, and it is allowable to convey the sample rack 90 using an endless shaped conveyance belt, similarly to the second conveyance lane 35.

In addition, similarly to the first conveyance lane 34, the conveyance method of the second conveyance lane 35 may be a method using a pusher passing through the groove portion.

The recovery unit 32 includes the re-inspection waiting tray 51, the recovery tray 52, a recovery side pusher mechanism 53 as an exemplary conveyance mechanism, a first recovery side guide rail 54, and a second recovery side guide rail 56.

The re-inspection waiting tray 51 is arranged on the other side in the first direction X of the recovery unit 32, and the recovery tray 52 is arranged on one side in the first direction X of the recovery unit 32. That is, the re-inspection waiting tray 51 is arranged on the upstream side in the conveyance direction of the recovery side pusher mechanism 53, which will be described below, and the recovery tray 52 is arranged on the downstream side in the conveyance direction.

The first conveyance lane 34 is arranged between the re-inspection waiting tray 51 and the recovery tray 52. In the re-inspection waiting tray 51 accommodates the sample rack 90 conveyed from the second conveyance lane 35 and waiting for necessity decision of re-inspection. The recovery tray 52 accommodates the sample rack 90 conveyed by the recovery side pusher member 57 (to be described below) from the re-inspection waiting tray 51 and waiting for recovery without receiving re-inspection.

Similarly to the supply tray 41 and the sample input tray 45, the re-inspection waiting tray 51 and the recovery tray 52 are formed in a substantially rectangular flat plate shape. A guide piece 51a is provided at each of both end portions in the second direction Y of the re-inspection waiting tray 51. The guide piece 51a is formed by bending the end portion of the re-inspection waiting tray 51 substantially perpendicularly upward in the up-down direction. In addition, a guide piece 52a is provided at each of both end portions in the second direction Y of the recovery tray 52. The guide piece 52a is formed by bending the end portion of the recovery tray 52 substantially perpendicularly upward in the up-down direction.

A first recovery side guide rail 54 is arranged in a substantially central portion in the second direction Y of the re-inspection waiting tray 51. The first recovery side guide rail 54 is arranged parallel to the first direction X on one surface of the re-inspection waiting tray 51. In addition, the first recovery side guide rail 54 extends from one end portion to the other end portion in the first direction X on the re-inspection waiting tray 51.

Similarly, the second recovery side guide rail 56 is arranged substantially at the center in the second direction Y on the recovery tray 52 in the second direction Y on the recovery tray 52. The second recovery side guide rail 56 is arranged parallel to the first direction X on one surface of the recovery tray 52. In addition, the second recovery side guide rail 56 extends from one end portion to the other end portion in the first direction X on the recovery tray 52.

The engagement groove portion 90b of the sample rack 90 is slidably engaged with the first recovery side guide rail 54 and the second recovery side guide rail 56. In addition, the first recovery side guide rail 54 and the second recovery side guide rail 56 prevent the sample rack 90 from falling down when the sample rack 90 moves in the first direction X. The first recovery side guide rail 54 and the second recovery side guide rail 56 guide the movement of the sample rack 90 together with the guide piece 51a and the guide piece 52a.

The third reading unit 38 is arranged in the vicinity of the re-inspection waiting tray 51. More specifically, the third reading unit 38 is arranged at one end portion in the first direction X on the re-inspection waiting tray 51, that is, in the vicinity of the first conveyance lane 34. The third reading unit 38 reads the identifier 91a of the rack side sample container 91 on the sample rack 90 arranged at the head among the sample racks 90 accommodated in the re-inspection waiting tray 51, that is, the sample rack 90 arranged at one end portion in the first direction X on the re-inspection waiting tray 51.

The recovery side pusher mechanism 53 includes the recovery side pusher member 57, an arm member 58, a slider 59, a driving belt 63, and a pusher driving unit 64 (refer to Fig. 5). The driving belt 63 is formed in an endless shape in which both ends in the axial direction are connected to each other. The driving belt 63 is provided at one end portion in the second direction Y on the conveyance device 30. The driving belt 63 is wound around a driving pulley and a driven pulley (the pulleys not illustrated) and arranged in the first direction X. The drive shaft of the pusher driving unit 64 is connected to the driving pulley. In addition, the strength of excitation when the pusher driving unit 64 is not operating is set larger than the force applied by the user to press the sample rack 90 at the time of recovery.

The slider 59 is fixed to the driving belt 63. In addition, an arm member 58 is connected to the slider 59. The recovery side pusher member 57 is provided on the tip end portion of the arm member 58.

The recovery side pusher member 57 includes a pressing surface portion 57a that comes in contact with a rear surface backward in the conveyance direction on the sample rack 90, a locking piece 57b, and a support surface portion 57c bending substantially perpendicularly from the pressing surface portion 57a.

The locking piece 57b is formed at an end portion of the pressing surface portion 57a, on the side opposite to the support surface portion 57c. The locking piece 57b is bent substantially perpendicularly from the end portion of the pressing surface portion 57a in a direction toward the opposite of the support surface portion 57c. The locking piece 57b is locked with a lower end portion in the up-down direction on the sample rack 90 when the pressing surface portion 57a comes into contact with the sample rack 90.

The pressing surface portion 57a comes in contact with the back surface of the sample rack 90 with the locking piece 57b being locked with the lower end portion of the sample rack 90, making it possible to reliably hold the sample rack 90. As a result, it is possible to prevent the sample rack 90 from falling over when the sample rack 90 is pressed and conveyed.

The support surface portion 57c is connected to the arm member 58. With the drive of the pusher driving unit 64, the driving belt 63 and the driven pulley are rotated via the driving pulley. Accordingly, the arm member 58 connected to the driving belt 63 via the slider 59 moves in the first direction X. With this configuration, the recovery side pusher member 57 connected to the arm member 58 also moves in the first direction X.

A sensor arm member 60 is connected to an end portion of the arm member 58, connected to the slider 59. The sensor arm member 60 protrudes from the arm member 58 toward one side in the first direction X. The tip end portion of the sensor arm member 60 protrudes more toward one side in the first direction X than the pressing surface portion 57a of the recovery side pusher member 57.

A front rack detection sensor 61 is provided at the tip end portion of the sensor arm member 60. The front rack detection sensor 61 detects the sample rack 90 positioned ahead of the sample rack 90 to be conveyed by the recovery side pusher member 57.

Examples of the applicable front rack detection sensor 61 include an infrared sensor, a mechanical sensor, an optical sensor, and other various sensors.

Note that the present exemplary embodiment has described an example in which the driving pulley and the driven pulley and the endless shaped driving belt 63 are used as the recovery side pusher mechanism 53, the present invention is not limited to is example. For example, the configuration may be a rack and a pinion, a structure using a gear and chain meshing with this gear, or a driving mechanism using a direct acting solenoid.

1-4. Configuration of control system of sample rack conveyance device

Next, a configuration of a control system of the sample rack conveyance device 30 will be described with reference to Fig. 5.

Fig. 5 is a block diagram illustrating the control system of the conveyance device 30.

As illustrated in Fig. 5, the conveyance device 30 includes a control unit 80. The control unit 80 includes for example: a central processing unit (CPU); a read only memory (ROM) for storing a program or the like executed by the CPU; and a random access memory (RAM) used as a work region of the CPU.

The control unit 80 is connected to each of the supply unit 31, the sample input unit 33, the recovery unit 32, the first conveyance lane 34, the second conveyance lane 35, the first reading unit 36, the second reading unit 37, the third reading unit 38, the lock mechanism 71, the cover open/close sensor 72, the recovery start button 73, and the display unit 74, via a system bus 81, and controls the whole.

The control unit 80 is connected to the supply side pusher mechanism 43 of the supply unit 31 and connected to the input side conveyance mechanism 44 of the sample input unit 33, and controls driving of these.

Furthermore, the recovery unit 32 includes a pusher movement amount storage unit 77. The pusher movement amount storage unit 77 stores the drive amount of the pusher driving unit 64 of the recovery side pusher mechanism 53, that is, the movement amount at the time of movement of the recovery side pusher member 57. The pusher movement amount storage unit 77 outputs the stored movement amount to the control unit 80.

At detection of the sample rack 90, at detection of the sample rack 90, the front rack detection sensor 61 outputs a detected rack detection signal to the control unit 80. The conveyance rack detection sensor 78 outputs the detected rack presence/absence signal to the control unit 80. The control unit 80 controls driving of the recovery side pusher mechanism 53 on the basis of the received rack detection signal, the rack presence/absence signal, and the movement amount stored in the pusher movement amount storage unit 77.

When the recovery start button 73 is pressed by the user, the recovery start button 73 outputs a recovery start signal to the control unit 80. When the recovery start signal is output to the control unit 80, the control unit 80 controls predetermined operation of individual units and other devices.

The lock mechanism 71 locks the open/close cover 40a (refer to Fig. 2) in a closed state. The lock mechanism 71 releases the locked state or locks the open/close cover 40a on the basis of an instruction from the control unit 80. The cover open/close sensor 72 detects the open/close state of the open/close cover 40a. The cover open/close sensor 72 outputs information associated with the detected open/close state of the open/close cover 40a to the control unit 80. The display unit 74 displays the locked state and various states of the lock mechanism 71 on the basis of the control signal of the control unit 80.

The first reading unit 36, the second reading unit 37, and the third reading unit 38 read the identifier 91a provided in the rack side sample container 91 and output the read information to the control unit 80. The control unit 80 stores the read information and controls predetermined operation of the supply unit 31, the recovery unit 32, the sample input unit 33, and other devices.

2. Operation of recovery unit in conveyance device

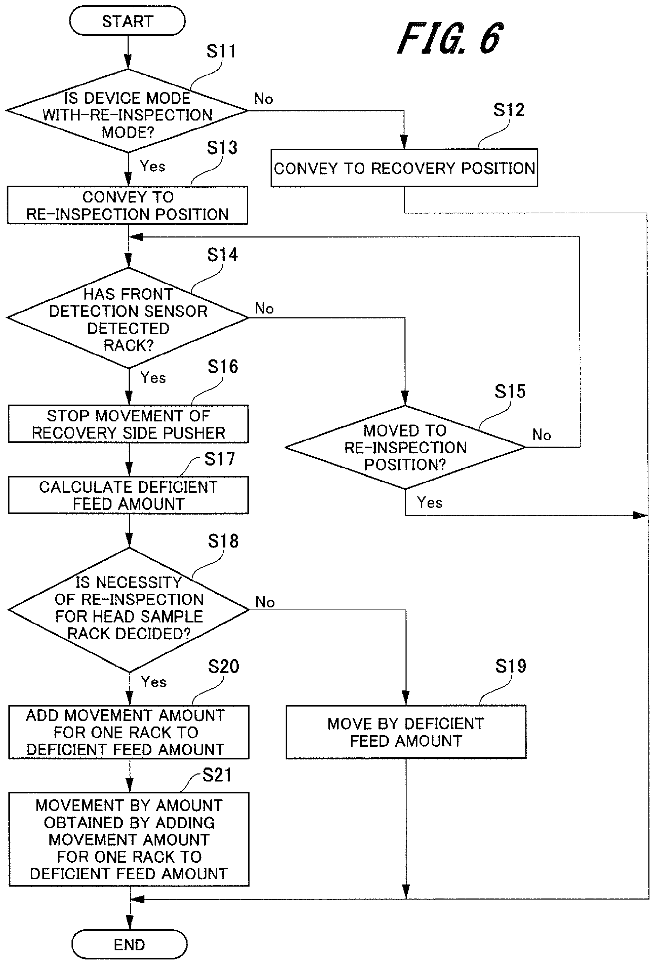

Next, an operation example of the recovery side pusher mechanism 53 in the recovery unit 32 will be described with reference to Figs. 6 to 8.

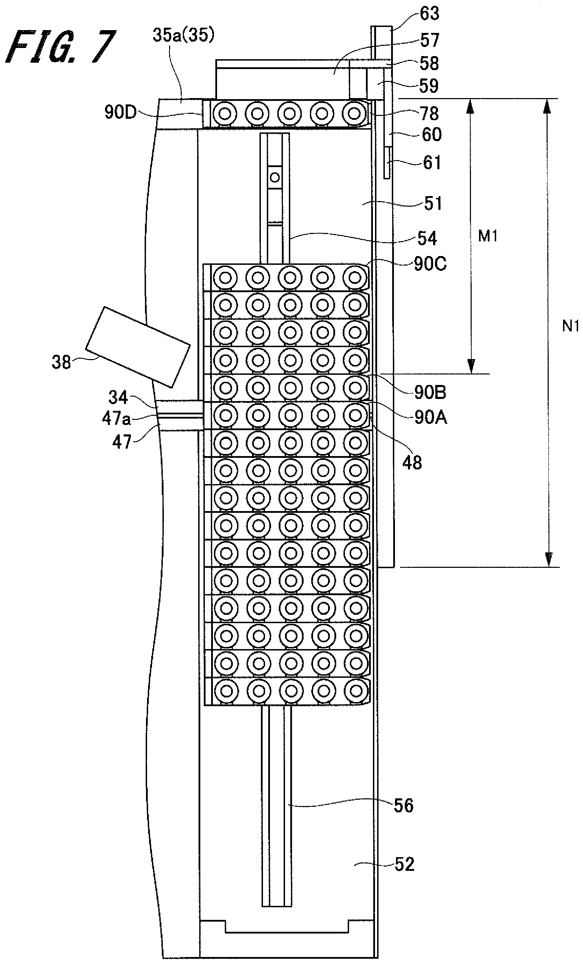

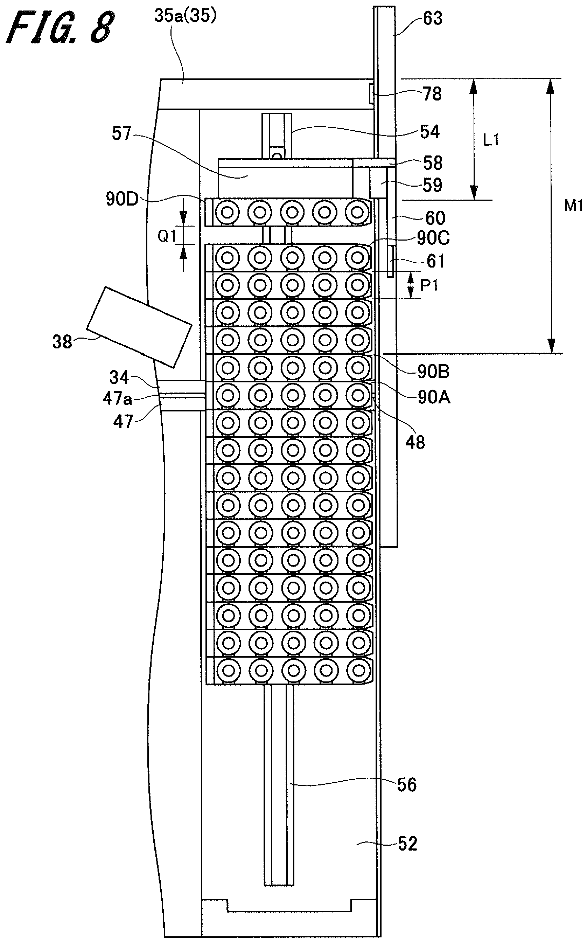

Fig. 6 is a flowchart illustrating operation of the recovery unit. Figs. 7 and 8 are explanatory diagrams illustrating the operation of the recovery unit.

First, the sample rack 90 supplied to the supply unit 31 is conveyed to the first conveyance lane 34, and the sample rack 90 is conveyed to the sample input unit 33 using the first conveyance lane 34. Next, the sample rack 90 is conveyed to the dispensation position in the sample input unit 33, and the sample contained in the rack side sample container 91 is supplied to the biochemical analyzer 1. This completes the dispensation of the sample contained in the rack side sample container 91. Then, the sample rack 90D on which dispensation has been completed is conveyed to the conveyance start position for recovery illustrated in Fig. 7.

Next, after completion of dispensation of the sample, the control unit 80 determines whether the preset device mode is a with-re-inspection mode or a without- re-inspection mode (step S11). In the processing of step S11, in a case where the control unit 80 determines that the preset device mode is a without-re-inspection mode (determination of NO in step S11), the control unit 80 sets the maximum movement distance of moving the recovery side pusher member 57 as a recovery conveyance distance N1.

As illustrated in Fig. 7, the recovery conveyance distance N1 is set from the conveyance start position to the recovery position that is a middle portion of the recovery tray 52 beyond the re-inspection waiting tray 51 in the recovery unit 32. The recovery conveyance distance N1 is set to be equal to the maximum movable distance of the recovery side pusher member 57 in the recovery side pusher mechanism 53.

Then, the control unit 80 moves the recovery side pusher member 57 by the recovery conveyance distance N1, and conveys the sample rack 90D to the recovery position (step 12). This completes the conveyance operation of the sample rack 90D by the recovery unit 32.

Moreover, in a case in the processing of step S11 where the control unit 80 determines that the preset device mode is a with-re-inspection mode (YES in step S11), the control unit 80 sets the maximum movement distance of moving the recovery side pusher member 57 as a re-inspection conveyance distance M1 (step S13). As illustrated in Fig. 7, the re-inspection conveyance distance M1 is a length from the conveyance start position to one end portion in the first direction X on the re-inspection waiting tray 51, that is, a position used for determination of necessity of re-inspection (hereinafter referred to as "re-inspection necessity determination position". More specifically, the re-inspection necessity determination position is a position at which a sample rack 90B illustrated in Figs. 7 and 8 is arranged.

Next, the control unit 80 moves the recovery side pusher member 57 on the basis of the set maximum movement distance of the recovery side pusher member 57. This moves the recovery side pusher member 57 in the first direction X to convey the sample rack 90D. In addition, the front rack detection sensor 61 moves together with the recovery side pusher member 57. The movement amount of the recovery side pusher member 57 from the conveyance start position in a case where the recovery side pusher member 57 has moved is stored in the pusher movement amount storage unit 77.

Next, the control unit 80 determines whether the front rack detection sensor 61 has detected the sample rack 90 (step S14). That is, the control unit 80 determines whether a rack detection signal has been output from the front rack detection sensor 61. Then, in a case where the control unit 80 determines that the front rack detection sensor 61 has not detected the sample rack 90 in the processing of step S14 (NO in step S14), the control unit 80 determines whether the recovery side pusher member 57 has moved up to the re-inspection conveyance distance M1 (step S15).

In a case in the processing of step S15 where the control unit 80 determines that the recovery side pusher member 57 has moved up to the re-inspection conveyance distance M1 (YES in step S15), the control unit 80 controls to stop the movement of the recovery side pusher member 57. That is, the sample rack 90 is not yet accommodated in the re-inspection waiting tray 51. With this configuration, the sample rack 90D is conveyed to the re-inspection necessity determination position of the re-inspection waiting tray 51, completing the conveyance operation of the sample rack 90D by the recovery unit 32.

In addition, in a case in the processing of step S15 where the control unit 80 determines that the recovery side pusher member 57 has not moved up to the re-inspection conveyance distance M1 (NO in step S15), the control unit 80 returns to the processing in step S14.

In a case in the processing of step S14 where the control unit 80 determines that the front rack detection sensor 61 has detected the sample rack 90, (YES in step S14), the control unit 80 stops the movement of the recovery side pusher member 57 (step S16). That is, as illustrated in Fig. 8, in a case where the front rack detection sensor 61 detects the sample rack 90C one before the sample rack 90D conveyed by the recovery side pusher member 57, the front rack detection sensor 61 outputs a rack detection signal to the control unit 80. Note that the sample rack 90C is the sample rack 90 arranged on the other side in the first direction X, that is, arranged at the last position among the sample racks 90 accommodated in the re-inspection waiting tray 51.

As illustrated in Fig. 8, when the recovery side pusher member 57 stops, the control unit 80 calls up the movement amount stored in the pusher movement amount storage unit 77, calculates a deficient feed amount Q1 on the basis of the movement amount (step S17). The deficient feed amount Q1 is an interval between the sample rack 90D conveyed by the recovery side pusher member 57 and the sample rack 90C arranged at the last of the re-inspection waiting tray 51. The deficient feed amount Q1 is calculated on the basis of a movement amount L1 from the conveyance start position to the stop position of the recovery side pusher member 57 and on the basis of a feed amount for one rack as a length in the first direction X of the sample rack 90, that is, a length P1 in the width direction.

First, the control unit 80 obtains a remainder W1 after dividing the movement amount L1 by the length P1 in the width direction of the sample rack 90. Here, the re-inspection conveyance distance M1 and the recovery conveyance distance N1 are set to integral multiples of the length P1 in the width direction of the sample rack 90. The deficient feed amount Q1 is obtained from the following Expression 1 on the basis of the remainder W1 and the length P1 in the width direction of the sample rack 90.

$$[\text{Expression 1}]$$

$$Q1 = P1 - W1$$

Next, the control unit 80 determines whether decision has been made on the necessity of re-inspection on the head sample rack 90B, that is, the sample rack 90B arranged in the re-inspection necessity determination position among the sample racks 90 finished in the re-inspection waiting tray 51 (step S18). That is, the third reading unit 38 reads the identifier 91a of the sample rack 90B. Then, on the basis of the information read by the third reading unit 38, the control unit 80 decides whether re-inspection is necessary for the rack side sample container 91 accommodated in the sample rack 90B.

The processing of step S18 determines whether the decision has been made on the necessity of re-inspection in the control unit 80. Then, in a case where the control unit 80 determines in the processing of step S18 that the decision on the necessity of re-inspection is not yet completed (NO in step S18), the control unit 80 moves the recovery side pusher member 57 by the deficient feed amount Q1 calculated in the processing of step S17 (step S19). This brings the sample rack 90D conveyed by the recovery side pusher member 57 into contact with the sample rack 90C arranged at the last position of the re-inspection waiting tray 51. As a result, the sample rack 90D is conveyed to the last position of the re-inspection waiting tray 51. This completes the recovery operation of the sample rack 90D by the recovery unit 32.

In a case where it is determined in the processing of step S18 that the decision on the necessity of re-inspection of the sample rack 90B arranged at the head is made (YES in step S18), the control unit 80 adds the movement amount for one rack, that is, the length P1 in the width direction of the sample rack 90 to the deficient feed amount Q1 calculated in the processing of step S17 (step S20). Note that the addition of the movement amount P1 for one rack unit in step S20 is the same regardless of whether the decision on the necessity of re-inspection of the sample rack 90B in the processing of step S18 is re-inspection is to be performed or re-inspection is not to be performed.

Next, the control unit 80 moves the recovery side pusher member 57 by an amount obtained by adding the movement amount P1 for one rack to the deficient feed amount Q1 (step S21). This causes the recovery side pusher member 57 to press the sample rack 90C arranged at the last of the re-inspection waiting tray 51 by one rack via the sample rack 90D being conveyed. Then, the sample rack 90B arranged at the re-inspection necessity determination position is done by one rack by the recovery side pusher member 57 via the sample rack 90 accommodated in the re-inspection waiting tray 51. The sample rack 90B is conveyed from the re-inspection waiting tray 51 to the first conveyance lane 34.

In a case re-inspection is to be performed on the sample rack 90B, the sample rack 90B is conveyed to the sample input unit 33 by the conveyance side pusher 48 of the first conveyance lane 34. In a case where re-inspection is not be performed on the sample rack 90B, the sample rack 90B is pressed by the recovery side pusher member 57 via the next sample rack 90 and is conveyed to the recovery tray 52.

This completes the conveyance operation of the sample rack 90D. Then, the control unit 80 returns to the processing of step S1 and repeats the above-described processing onto the sample rack 90 conveyed to the conveyance start position for recovery.

In this manner, according to the conveyance device 30 of the present exemplary embodiment, even when the position of the sample rack 90 accommodated in the re-inspection waiting tray 51 is shifted, the sample rack is accurately conveyed to the predetermined position by the recovery side pusher member 57. In addition, it is possible to control the movement amount of the recovery side pusher member 57 without being influenced by the number of sample racks 90 accommodated in the re-inspection waiting tray 51. Therefore, it is possible to easily perform movement control of the recovery side pusher member 57 with no necessity to accurately detect the number of sample racks 90 accommodated in the re-inspection waiting tray 51.

Furthermore, according to the conveyance device 30 of the present exemplary embodiment, when the front rack detection sensor 61 has detected the sample rack 90, conveyance of the rack is once stopped, and the deficient feed amount is calculated on the basis of the actual movement amount of the recovery side pusher member 57. This makes it possible to accurately convey the sample rack 90 to a predetermined position without being influenced by the shape of the sample rack 90 or the sensitivity of the sensor detecting the sample rack 90.

Furthermore, while the flow illustrated in Fig. 6 describes operation of the recovery side pusher mechanism 53, the present invention is not limited to this. For example, it is allowable to provide a front rack detection sensor for detecting the sample rack 90 in front of the sample rack 90 to be conveyed on the pusher member of the supply side pusher mechanism 43, similarly to the recovery side pusher mechanism 53. In addition, the supply side pusher mechanism 43 may also convey the sample rack 90 in a manner similar to the above-described operation of the recovery side pusher mechanism 53.

Moreover, when the sample rack 90 accommodated in the re-inspection waiting tray 51 is conveyed to the first conveyance lane 34, or when the sample rack 90 arranged in the first conveyance lane 34 is conveyed to the recovery tray 52, it is allowable to move the first recovery side guide rail 54 in the first direction X. This makes it possible to smoothly convey the sample rack 90 and prevent the sample rack 90 from falling over during conveyance when the sample rack 90 moves on the first conveyance lane 34 in the first direction X.

3. Operation example of recovery operation of sample rack

Next, an operation example of the recovery operation of the sample rack 90 accommodated in the recovery tray 52 will be described with reference to Figs. 7 to 11.

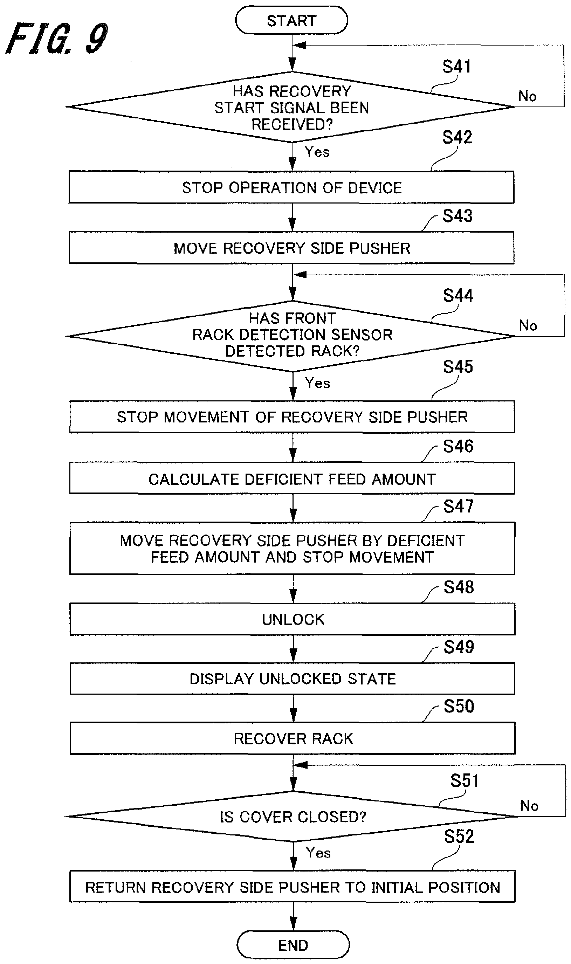

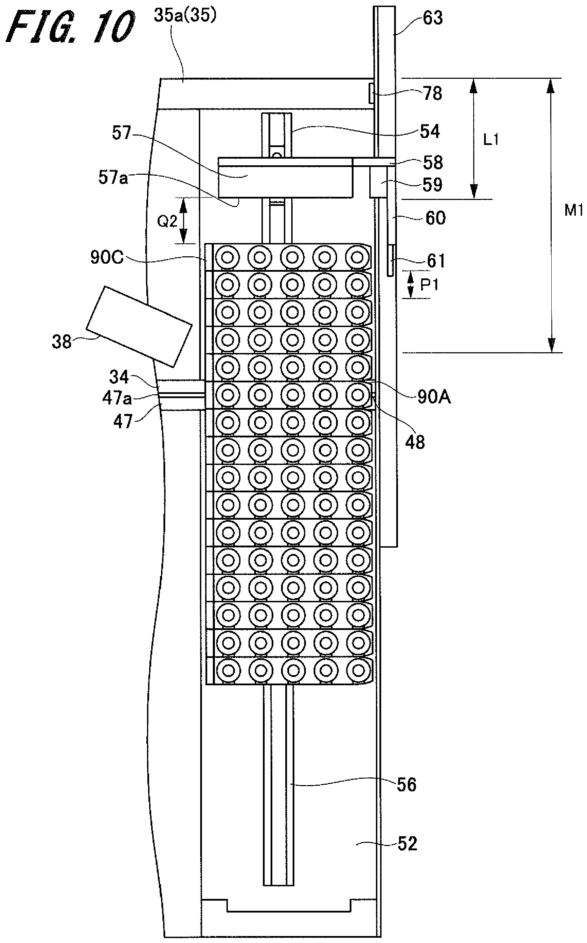

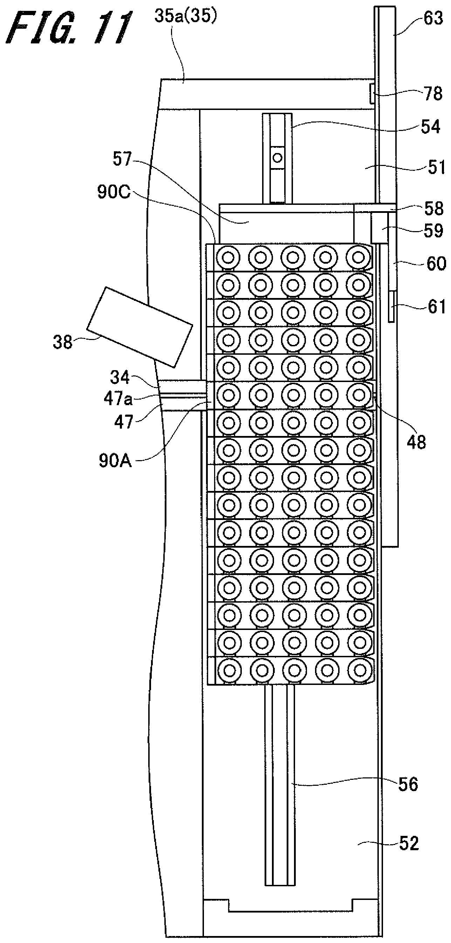

Fig. 9 is a flowchart illustrating recovering operation of the sample rack 90, and Figs. 10 and 11 are explanatory views illustrating the recovery operation.

As illustrated in Fig. 9, the control unit 80 first determines whether a recovery start signal has been received (step S41). Here, when the recovery start button 73 is pressed by the user, the recovery start button 73 outputs a recovery start signal to the control unit 80. Then, in a case where the control unit 80 has received a recovery start signal in the processing of step S41 (YES in step S41), the control unit 80 stops operation of the conveyance device 30 (step S42).

Next, the control unit 80 drives the pusher driving unit 64 to move the recovery side pusher member 57 (step S43). Next, the control unit 80 determines whether the front rack detection sensor 61 has detected the sample rack 90 (step S44).

Then, in a case where the front rack detection sensor 61 has detected the sample rack 90, the front rack detection sensor 61 outputs a rack detection signal to the control unit 80. In a case where in the processing of step S44 the control unit 80 has received the rack detection signal and determined that the front rack detection sensor 61 has detected the sample rack 90 (YES in step S44), the control unit 80 controls to stop the movement of the recovery side pusher member 57 (step S45).

Next, when the recovery side pusher member 57 stops, the control unit 80 calls up the movement amount stored in the pusher movement amount storage unit 77, and calculates the deficient feed amount on the basis of this movement amount (step S46). Here, in a case where the recovery side pusher member 57 is conveying the sample rack 90 as illustrated in Fig. 8, the control unit 80 calculates the deficient feed amount Q1 on the basis of the above-described Expression 1.

Note that in a case where the recovery side pusher member 57 is not conveying the sample rack 90 as illustrated in Fig. 10, a deficient feed amount Q2 is obtained as an interval between the sample rack 90B arranged at the last of the re-inspection waiting tray 51 or the last of the recovery tray 52, and a pressing surface portion 57a of the recovery side pusher member 57. The deficient feed amount Q2 at this time is calculated by adding the feed amount for one rack as the length of the sample rack 90 in the first direction X, that is, the length P1 in the width direction, to the deficient feed amount Q1 illustrated in Fig. 8. Therefore, the deficient feed amount Q2 can be obtained from the following Expression 2.

$$[Expression\ 2]$$

$$Q2 = (P1 - W1) + P1$$

Note that as described above, W1 is the remainder obtained when the movement amount L1 is divided by the length P1 of the sample rack 90 in the width direction.

Furthermore, for example, whether to calculate the deficient feed amount on the basis of Expression 1 or on the basis of Expression 2 is determined as follows.

First, before the recovery side pusher member 57 starts movement, the presence or absence of the sample rack 90 at the conveyance start position is detected by the conveyance rack detection sensor 78 provided at the conveyance start position for recovery provided on the second conveyance lane 35. The conveyance rack detection sensor 78 outputs the detected rack presence/absence signal to the control unit 80.

In a case where the sample rack 90 is present at the conveyance start position on the basis of the rack presence/absence signal, that is, in a case where the recovery side pusher member 57 moves while conveying the sample rack 90, the control unit 80 calculates the deficient feed amount Q1 from the above-described Expression 1. In a case where the sample rack 90 is absent at the conveyance start position on the basis of the rack presence/absence signal, that is, in a case where the recovery side pusher member 57 moves without conveying the sample rack 90, the control unit 80 calculates the deficient feed amount Q2 from the above-described Expression 2.

In this manner, it is possible to accurately calculate the deficient feed amount during the recovery operation by detecting the presence or absence of the sample rack 90 before the recovery side pusher member 57 starts to move with the conveyance rack detection sensor 78 provided at the conveyance start position.

When the deficient feed amount is calculated in the processing of step S46, the control unit 80 moves the recovery side pusher member 57 by the deficient feeding amount (step S47). This brings the recovery side pusher member 57 into contact with the rear of the sample rack 90B arranged at the last of the re-inspection waiting tray 51 or the last of the recovery tray 52, as illustrated in Fig. 11.

Next, the control unit 80 unlocks the open/close cover 40a in the lock mechanism 71 (step S48). Then, the control unit 80 controls the display unit 74 to display an unlocked state (step S49). This makes it possible to notify the user that the lock mechanism 71 is unlocked and the open/close cover 40a can be opened.

Next, the user opens the open/close cover 40a and recovers the sample rack 90 accommodated in the recovery tray 52 (step S50). At this time, as illustrated in Fig. 11, the recovery side pusher member 57 is in contact with the rear of the sample rack 90C arranged at the last of the re-inspection waiting tray 51 or the last of the recovery tray 52. Accordingly, the movement of the sample rack 90 accommodated in the re-inspection waiting tray 51 and the recovery tray 52 to the other side in the first direction X is restricted by the recovery side pusher member 57. In other words, the recovery side pusher member 57 serves as a stopper.

In addition, the strength of excitation when the pusher driving unit 64 is not operating is set larger than the force applied by the user to press the sample rack 90 at the time of recovery. Therefore, even if the sample rack 90 accommodated in the recovery tray 52 or the re-inspection waiting tray 51 is pressed when the user recovers the sample rack 90 accommodated in the recovery tray 52, the position of the sample rack 90 would not be shifted. This makes it possible to prevent the sample rack 90 that is not supposed to be have re-inspection from being erroneously conveyed to the re-inspection stage due to a shift in the position of the sample rack 90A arranged at the conveyance start position for re-inspection on the first conveyance lane 34.

Next, the control unit 80 determines whether the open/close cover 40a is closed on the basis of a signal from the cover open/close sensor 72 (step S51). When the user recovers the sample rack 90 and the open/close cover 40a is closed, the cover open/close sensor 72 outputs information indicating closure of the open/close cover 40a to the control unit 80.

Then, in a case where the control unit 80 determines that the open/close cover 40a is closed in the processing of step S51, (YES at step S51), the control unit 80 returns the recovery side pusher member 57 to the conveyance start position being the initial position (step S52). Furthermore, the control unit 80 operates the lock mechanism 71 to lock the open/close cover 40a. Execution of the above-described processes completes the recovery operation of the sample rack 90 in the conveyance device 30.

As described above, the position shift of the sample rack 90 accommodated in the recovery tray 52 and the re-inspection waiting tray 51 is prevented by the recovery side pusher member 57 during the recovery operation. This eliminates the need to correct the position of the sample rack 90 after completion of the recovery operation. As a result, it is possible to quickly restart the conveyance operation of the conveyance device 30 after recovering the sample rack 90.

Note that while the exemplary embodiment described above is a case where the recovery start button 73 is provided as the recovery start signal output unit and the lock mechanism 71 is unlocked by pressing the recovery start button 73, the present invention is not limited to this. For example, instead of providing the recovery start button 73, the control unit 80 may determine the start of recovery operation on the basis of a signal indicating that the open/close cover 40a is opened output from the cover open/close sensor 72 and may perform the above processing. In other words, the recovery start signal may be output from the cover open/close sensor 72 as the recovery start signal output unit to the control unit 80.

Furthermore, while the description is an example of providing the lid portion 40 and the open/close cover 40a configured to cover the recovery tray 52, the supply tray 41, or the like, it is allowable to omit the lid portion 40 or the open/close cover 40a from the configuration. The control unit 80 may determine that the recovery operation has been started and perform the above-described processing when the recovery start button 73 is pressed.

Furthermore, while the above-described exemplary embodiment is an example in which the re-inspection waiting tray 51 and the recovery tray 52 are arranged vertically in the conveyance direction, that is, the first direction X, the present invention is not limited thereto. For example, the re-inspection waiting tray 51 and the recovery tray 52 may be arranged side by side, that is, arranged in the second direction Y.

Note that the present invention is not limited to the embodiment described above and illustrated in the drawings, and various modifications can be made without departing from the scope and the spirit of the invention described in the claims. For example, while the above has described an example in which the present invention is applied to a biochemical analyzer used for analyzing a biospecimen such as blood or urine, as an automatic analyzer, the present invention is not limited thereto, and can be applied to devices that perform analysis of various other objects such as water quality and food. Furthermore, application as the automatic analyzer may include, for example, an immunoassay apparatus performing immunity analysis such as an antigen-antibody reaction of a subject.

Reference Signs List

| | |
|---|---|
| 1 | Biochemical analyzer (automatic analyzer) |
| 30 | Sample rack conveyance device |
| 31 | Supply unit |
| 32 | Recovery unit |
| 33 | Sample input unit |
| 34 | First conveyance lane (conveyance lane) |
| 35 | Second conveyance lane |
| 36 | First reading unit |
| 37 | Second reading unit |
| 38 | Third reading unit |
| 39 | Support base |
| 40 | Lid portion |
| 40a | Open/close cover |
| 51 | Re-inspection waiting tray |
| 52 | Recovery tray |
| 53 | Recovery side pusher mechanism (conveyance mechanism) |
| 57 | Recovery side pusher member (pusher member) |
| 57a | Pressing surface portion |
| 57b | Locking piece |
| 57c | Support surface portion |
| 58 | Arm member |
| 59 | Slider |
| 60 | Sensor arm member |
| 61 | Front rack detection sensor |
| 63 | Driving belt |
| 64 | Pusher driving unit (driving unit) |
| 71 | Lock mechanism |
| 72 | Cover open/close sensor |
| 73 | Recovery start button (recovery start signal output unit) |
| 74 | Display unit |
| 75 | Operation display unit |
| 77 | Pusher movement amount storage unit |
| 78 | Conveyance rack detection sensor |
| 80 | Control unit |
| 81 | System bus |
| 90, 90A, 90B, 90C | Sample rack |
| 91a | Identifier |
| 100 | Biochemical analysis system |
| L1 | Movement amount |
| M1 | Re-inspection conveyance distance |
| N1 | Recovery conveyance distance |
| P1 | Feed amount for one rack |
| Q1, Q2 | Deficient feed amount |
| X | First direction |
| Y | Second direction |

**Claims**

1.  A sample rack conveyance device comprising:

a pusher member that presses and conveys the sample rack accommodating a plurality of sample containers;

a driving unit that moves the pusher member in a conveyance direction;

a control unit that controls driving of the driving unit;

a front rack detection sensor that moves together with the pusher member, detects a sample rack arranged more frontward in the conveyance direction than the sample rack conveyed by the pusher member, and outputs a rack detection signal to the control unit when the sample rack is detected; and

a pusher movement amount storage unit that stores a movement amount at the time of movement from a sample rack conveyance start position on the pusher member,

wherein the control unit controls driving of the driving unit on the basis of the movement amount stored in the pusher movement amount storage unit.

2. The sample rack conveyance device according to claim 1,

wherein the control unit temporarily stops the movement of the pusher member after reception of the rack detection signal from the front rack detection sensor, and calculates a deficient feed amount that is a remaining movement amount in the movement of the pusher member on the basis of a movement amount from the conveyance start position to the position of temporary stopping stored in the pusher movement amount storage unit.

3. The sample rack conveyance device according to claim 1,

wherein the control unit sets a maximum movement distance to move the pusher member in advance before conveyance of the sample rack by the pusher member, and moves the pusher member up to the maximum movement distance in a case where the rack detection signal has not been detected from the front rack detection sensor.

4. The sample rack conveyance device according to claim 2, further comprising

a tray for accommodating the sample rack,

wherein the control unit determines whether to add a feed amount for one rack to the calculated deficient feed amount on the basis of information of the sample rack arranged at the head in the conveyance direction on the sample rack accommodated in the tray.

5. An automatic analysis system comprising:

an automatic analyzer that analyzes a sample contained in a sample container; and

a sample rack conveyance device that conveys a sample rack accommodating the sample container,

wherein the sample rack conveyance device includes:

a pusher member that presses and conveys the sample rack;

a driving unit that moves the pusher member in a conveyance direction;

a control unit that controls driving of the driving unit;

a front rack detection sensor that moves together with the pusher member, detects a sample rack arranged more frontward in the conveyance direction than the sample rack conveyed by the pusher member, and outputs a rack detection signal to the control unit when the sample rack is detected; and

a pusher movement amount storage unit that stores a movement amount at the time of movement from a sample rack conveyance start position on the pusher member, and

the control unit controls driving of the driving unit on the basis of the movement amount stored in the pusher movement amount storage unit.

*FIG. 1*

100

1

X  Y

*FIG. 2*

EP 3 396 387 A1

FIG. 3

*FIG. 4*

# FIG. 5

80 → CONTROL UNIT

~81

31 — SUPPLY UNIT
43 — SUPPLY SIDE PUSHER MECHANISM

33 — SAMPLE INPUT UNIT
44 — INPUT SIDE CONVEYANCE MECHANISM

32 — RECOVERY UNIT
53 — RECOVERY SIDE PUSHER MECHANISM
61 — FRONT RACK DETECTION SENSOR
64 — PUSHER DRIVING UNIT
44 — PUSHER MOVEMENT AMOUNT STORAGE UNIT

FIRST CONVEYANCE LANE —34

SECOND CONVEYANCE LANE —35
CONVEYANCE RACK DETECTION SENSOR —78

FIRST READING UNIT —36

SECOND READING UNIT —37

THIRD READING UNIT —38

LOCK MECHANISM —71

COVER OPEN/ CLOSE SENSOR —72

RECOVERY START BUTTON —73

DISPLAY UNIT —74

*FIG. 6*

```
                    ┌─────────┐
                    │  START  │
                    └────┬────┘
                         │
                         ▼                    S11
                  ╱───────────────╲
                 ╱  IS DEVICE MODE  ╲    No
                ⟨  WITH-RE-INSPECTION ⟩────────────────────┐
                 ╲      MODE?       ╱                       │
                  ╲───────────────╱                         │            S12
                         │ Yes      S13                      ▼
                         ▼                         ┌──────────────────────────────┐
              ┌──────────────────────┐             │ CONVEY TO RECOVERY POSITION  │
              │     CONVEY TO        │             └──────────────┬───────────────┘
              │  RE-INSPECTION POSITION│                           │
              └──────────┬───────────┘                            │
                         │ ◄──────────────────────────────┐       │
                         ▼            S14                  │       │
                  ╱───────────────╲                        │       │
                 ╱   HAS FRONT      ╲    No                 │       │
                ⟨  DETECTION SENSOR  ⟩──────────────┐       │       │
                 ╲    DETECTED      ╱                │       │       │
                  ╲     RACK?      ╱                 │       │       │
                   ╲─────────────╱                  │       │       │
                         │ Yes      S16             ▼       │       │
                         ▼                   ╱───────────────╲   S15 │
              ┌──────────────────────┐      ╱   MOVED TO      ╲  No  │
              │   STOP MOVEMENT OF   │     ⟨  RE-INSPECTION    ⟩─────┘
              │ RECOVERY SIDE PUSHER │      ╲   POSITION?     ╱
              └──────────┬───────────┘       ╲───────────────╱
                         │        S17              │ Yes
                         ▼                         │
              ┌──────────────────────┐             │
              │ CALCULATE DEFICIENT  │             │
              │    FEED AMOUNT       │             │
              └──────────┬───────────┘             │
                         │        S18              │
                         ▼                         │
                  ╱───────────────╲                │
                 ╱ IS NECESSITY     ╲   No          │
                ⟨ OF RE-INSPECTION   ⟩──────┐       │
                 ╲ FOR HEAD SAMPLE  ╱        │       │
                  ╲ RACK DECIDED?  ╱         │       │
                   ╲─────────────╱           │       │
                         │ Yes    S20        ▼  S19  │
                         ▼              ┌──────────────────────┐
              ┌──────────────────────┐  │   MOVE BY DEFICIENT  │
              │ ADD MOVEMENT AMOUNT  │  │    FEED AMOUNT       │
              │   FOR ONE RACK TO    │  └──────────┬───────────┘
              │ DEFICIENT FEED AMOUNT│             │
              └──────────┬───────────┘             │
                         │        S21              │
                         ▼                         │
              ┌──────────────────────┐             │
              │  MOVEMENT BY AMOUNT   │             │
              │ OBTAINED BY ADDING    │             │
              │  MOVEMENT AMOUNT      │             │
              │  FOR ONE RACK TO      │             │
              │ DEFICIENT FEED AMOUNT │             │
              └──────────┬───────────┘             │
                         │ ◄──────────────────────┘
                         ▼
                    ┌─────────┐
                    │   END   │
                    └─────────┘
```

FIG. 7

*FIG. 8*

35a(35)

63

78

57

54

58

59

L1

90D

60

90C

61

P1

M1

Q1

38

34

47a

47

90B

90A

48

56

52

*FIG. 9*

```
                        ( START )
                            │
                            ▼◄──────────────────────┐
                      ╱─────────────╲      S41       │
                    ╱  HAS RECOVERY   ╲              │
                  ╱  START SIGNAL BEEN   ╲   No       │
                   ╲    RECEIVED?       ╱ ───────────┘
                    ╲─────────────────╱
                            │ Yes          S42
                            ▼
              ┌──────────────────────────────┐
              │    STOP OPERATION OF DEVICE   │
              └──────────────────────────────┘
                            │              S43
                            ▼
              ┌──────────────────────────────┐
              │   MOVE RECOVERY SIDE PUSHER   │
              └──────────────────────────────┘
                            │
                            ▼◄──────────────────────┐
                      ╱─────────────╲      S44       │
                    ╱   HAS FRONT     ╲              │
                  ╱ RACK DETECTION SENSOR ╲  No      │
                   ╲  DETECTED RACK?   ╱ ───────────┘
                    ╲─────────────────╱
                            │ Yes          S45
                            ▼
              ┌──────────────────────────────┐
              │ STOP MOVEMENT OF RECOVERY SIDE PUSHER │
              └──────────────────────────────┘
                            │              S46
                            ▼
              ┌──────────────────────────────┐
              │  CALCULATE DEFICIENT FEED AMOUNT │
              └──────────────────────────────┘
                            │              S47
                            ▼
              ┌──────────────────────────────┐
              │ MOVE RECOVERY SIDE PUSHER BY DEFICIENT │
              │  FEED AMOUNT AND STOP MOVEMENT │
              └──────────────────────────────┘
                            │              S48
                            ▼
              ┌──────────────────────────────┐
              │            UNLOCK             │
              └──────────────────────────────┘
                            │              S49
                            ▼
              ┌──────────────────────────────┐
              │     DISPLAY UNLOCKED STATE    │
              └──────────────────────────────┘
                            │              S50
                            ▼
              ┌──────────────────────────────┐
              │         RECOVER RACK          │
              └──────────────────────────────┘
                            │
                            ▼◄──────────────────────┐
                      ╱─────────────╲      S51       │
                    ╱                 ╲              │
                   ╲  IS COVER CLOSED? ╱   No ───────┘
                    ╲─────────────────╱
                            │ Yes          S52
                            ▼
              ┌──────────────────────────────┐
              │ RETURN RECOVERY SIDE PUSHER TO INITIAL POSITION │
              └──────────────────────────────┘
                            │
                            ▼
                        (  END  )
```

FIG. 10

**FIG. 11**

## INTERNATIONAL SEARCH REPORT

| | International application No. |
| --- | --- |
| | PCT/JP2016/086497 |

A. CLASSIFICATION OF SUBJECT MATTER
*G01N35/04(2006.01)i*

According to International Patent Classification (IPC) or to both national classification and IPC

B. FIELDS SEARCHED

Minimum documentation searched (classification system followed by classification symbols)
G01N35/04

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2011-137680 A  (Sysmex Corp.), 14 July 2011 (14.07.2011), paragraphs [0055] to [0069]; fig. 3 to 4 & US 2011/0160899 A1 paragraphs [0048] to [0062]; fig. 3 to 4 & EP 2339355 A2       & CN 102109530 A | 1-5 |
| A | JP 2007-527011 A  (Beckman Coulter, Inc.), 20 September 2007 (20.09.2007), paragraphs [0037] to [0041]; fig. 17 to 20 & US 2005/0196320 A1 paragraphs [0062] to [0066]; fig. 17 to 20 & WO 2005/093432 A2     & EP 1721168 A2 | 1-5 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03 February 2017 (03.02.17) | 14 February 2017 (14.02.17) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (January 2015)

**INTERNATIONAL SEARCH REPORT**

International application No.

PCT/JP2016/086497

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2013-156254 A  (F. Hoffmann-La Roche AG.), 15 August 2013 (15.08.2013), paragraphs [0044] to [0051]; fig. 1 to 8 & US 2013/0195720 A1 paragraphs [0051] to [0060]; fig. 1 to 8 & EP 2620776 A1          & CN 103226149 A | 1-5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002181835 A